# EUROPÄISCHE PATENTSCHRIFT

(11) **EP 2 544 900 B1**
(45) Veröffentlichungstag und Bekanntmachung des Hinweises auf die Patenterteilung: **06.05.2015**
(21) Anmeldenummer: 11721987.3
(22) Anmeldetag: 08.03.2011
(51) Int. Cl.: B42D 15/00, C09J 9/02, H01R 4/04

(54) **SICHERHEITS- UND/ODER WERTDOKUMENT MIT EINEM SCHALTKREIS**
SECURITY DOCUMENT AND/OR VALUE DOCUMENT HAVING A CIRCUIT
DOCUMENT DE SÉCURITÉ ET/OU DE VALEUR COMPORTANT UN CIRCUIT

(30) Priorität: 11.03.2010 DE 102010011127
(43) Veröffentlichungstag der Anmeldung: 16.01.2013
(73) Patentinhaber: Bundesdruckerei GmbH, 10958 Berlin (DE)
(72) Erfinder: MUTH, Oliver, 12277 Berlin (DE); PAESCHKE, Manfred, 16348 Wandlitz (DE); KLOESER, Joachim, 10779 Berlin (DE); FERBER, Alexander, 12105 Berlin (DE)
(74) Vertreter: Jungblut & Seuss
(86) Internationale Anmeldenummer: PCT/DE2011/000235
(87) Internationale Veröffentlichungsnummer: WO 2011/110163

(56) Entgegenhaltungen:
- EP-A1- 1 411 465
- EP-A1- 2 055 757
- EP-A1- 2 211 354
- WO-A1-2009/054386

## Beschreibung

### Gebiet der Erfindung

Die Erfindung betrifft eine Klebstoffzusammensetzung enthaltend: ein Bindemittel enthaltend ein organisches Polymer oder mehrere verschiedene organische Polymere, elektrisch leitfähige Partikel, eine Verwendung einer solchen Klebstoffzusammensetzung sowie ein Sicherheits- und/oder Wertdokument enthaltend eine solche Klebstoffzusammensetzung.

Stand der Technik und Hintergrund der Erfindung.

Sicherheits- und/oder Wertdokumente, wie beispielsweise Personalausweise, Reisepässe, ID-Karten, Zugangskontrollausweise, Visa, Tickets, Führerscheine, Kraftfahrzeugpapiere, personalisierte Wertpapiere Kreditkarten, oder personalisierte Chipkarten, weisen zunehmend elektronische Schaltkreise, und sonstige aktive und passive elektronische Bauelemente, wie beispielsweise integrierte Halbleiter (ICs), aber auch Chipmodule, Displays, Batterien, Spulen, Kondensatoren, Kontaktstellen, usw., auf. In diesem Zusammenhängen ist es oft notwendig, auf oder innerhalb des Sicherheits- und/oder Wertdokumentes leitfähige Strukturen (elektrische Leitungen), beispielsweise Leiterbahnen, einzurichten, welche elektronische Komponenten miteinander elektrisch verbinden oder auch eigenständige Funktionen innerhalb eines Schaltkreises ausüben. Letzteres ist beispielsweise im Falle einer RFID Antenne gegeben.

Die Kontaktierung zwischen Kontaktbereichen eines Schaltkreises und zugeordneten Kontaktbereichen der elektrischen Leitungen kann auf verschiedene Weisen erfolgen. Besonders in den Fällen, wo der Schaltkreis als nackter Chip, und nicht als Modul, in das Sicherheits- und/oder Wertdokument integriert wird, geschieht dies typischerweise in dem sogenannten Flip-Chip Verfahren. Dabei werden die Kontaktstellen des Schaltkreises mit den Kontaktstellen der elektrischen Leitungen mittels eines Isotropic Conductive Adhesive (ICA) oder Anisotropic Conductive Adhesive (ACA) elektrisch kontaktiert und mechanisch verbunden, oder mittels eines NCA (Non Conductive Adhesive) mechanisch so verbunden, dass nur zwischen den Bumps/Pads der Chips und der Substratmetallisierung eine elektrisch leitfähige Kontaktierung erfolgt. ICAs und ACAs enthalten im Wesentlichen eine polymere Bindermatrix mit elektrisch leitfähigen Partikeln. NCA's sind nicht leitfähige Materialien (allgemeiner Kommentar: NCA's sind elektrisch nicht leitfähige Materialien, d.h. sie sind nicht mit elektrisch leitfähigen Partikeln gefüllt. Diesbezüglich lassen sich in die Matrix des Klebers geeignete leitfähige Partikel einfacher einbauen, es gibt damit geringere "Störungen" und "Überlagerungseffekte" als mit den bei ICA und NCA für die Leitfähigkeit verantwortlichen Partikeln. ICAs leiten Strom nach Aushärtung der Klebverbindung in alle drei Raumrichtungen, während ACAs den Strom nur in eine Raumrichtung leiten, nämlich zwischen den einander gegenüberliegenden Kontaktbereichen des Schaltkreises und der elektrischen Leitungen. ICAs und ACAs können als Pasten aber auch als Filme vorliegen. Die Klebstoffzusammensetzungen müssen per se nicht notwendigerweise leitfähig sein. Die elektrisch leitfähige Verbindung kann nämlich auch erst im Zuge der Herstellung der Klebeverbindung, meist durch kombinierte Anwendung von Druck und Temperatur, entstehen. Dies ist insbesondere bei ACAs der Fall, da dabei Druck in Richtung einer Verbindunglinie einander zugeordneter und elektrisch zu kontaktierender Kontaktbereiche ausgeübt wird. Beide, ICAs und ACAs sind in vielen Varianten aus dem Stand der Technik bekannt. Lediglich als Beispiele seien genannt WO 2006/055161 und US 6,592,783.

Die insofern bekannten Klebstoffzusammensetzungen haben lediglich die Funktion, sowohl eine mechanische als auch eine elektrische Verbindung zwischen einander zugeordneten Kontaktbereichen herzustellen.

Insbesondere bei Sicherheits- und/oder Wertdokumenten mit integrierten Schaltkreisen stellt sich das Problem, dass insbesondere die Schaltkreise empfindlich gegenüber der Einstrahlung von elektromagnetischer Strahlung sind, sei es im IR-Bereich, dem sichtbaren Bereich, oder dem Röntgenbereich. Eine solche Einstrahlung kann einerseits im Zuge der Herstellung des Sicherheits- und/oder Wertdokumentes stattfinden, beispielsweise bei der Personalisierung mittels Lasergravur. Weiterhin kann eine solche Einstrahlung von einer unbefugten Person bewirkt werden, beispielsweise mit dem Ziel der Zerstörung der Funktionalität des Schaltkreises oder der Ausforschung des Schaltkreises, letzteres beispielsweise um eine Chipstruktur des Schaltkreises zu evaluieren. Zwar kann ein Schutz gegen solche Einstrahlungen durch Abdeckung mit für die Strahlung intransparenten Folien, Lacken oder sonstigen Beschichtungen erfolgen, dies ist aber nicht immer praktikabel.

Es wäre daher wünschenswert, einen Schutz eines in ein Sicherheits- und/oder Wertdokument integrierten Schaltkreises vor Einstrahlung elektromagnetischer Strahlung einzurichten, ohne dass hierzu separate Maßnahmen erforderlich sind.

Dokument EP 14 11465 A1 offenbart ein Dokument nach dem Oberbegriff des Anspruchs 1.

### Technisches Problem der Erfindung

Der Erfindung liegt daher das technische Problem zu Grunde, eine Klebstoffzusammensetzung zur elektrischen Kontaktierung anzugeben, welche zugleich eine Funktion als Schutz gegen Einstrahlung elektromagnetischer Strahlung, beispielsweise zum Zwecke der Analyse oder Zerstörung der kontaktierten elektrischen Komponenten im Bereich der Kontakte, umfasst.

### Grundzüge der Erfindung und bevorzugte Ausführungsformen

Zur Lösung dieses technischen Problems lehrt die Erfindung ein Sicherheits- und/oder wertdokument nach Anspruch 1.

Mit der Erfindung wird erreicht, dass im Bereich der mittels der Klebstoffzusammensetzung kontaktierten Kontakte zu Manipulations-, Observations- oder Zerstörungszwecken eingestrahlte elektromagnetische Strahlung absorbiert oder reflektiert wird und so solche zu solchen Zwecken ergriffene Maßnahmen ohne Erfolg bleiben.

Bei der Klebstoffzusammensetzung kann es sich insbesondere um ein ACA oder ICA handeln.

Die Klebstoffzusammensetzung enthält neben den elektromagnetische Strahlung absorbierenden oder reflektierenden elektrisch leitfähigen oder nichtleitfähigen Partikel auch im Rahmen der ACA und ICA Technologien übliche und von besagten Partikeln verschiedene elektrische Leitpartikel.

Das Bindemittel enthält vorzugsweise ein Polymer aus der Gruppe bestehend aus "Epoxy, Acryl, Methacryl, Polyester, Novolac, Phenoxy, und Mischungen oder Copolymere solcher Polymere" oder besteht hieraus. Das Bindemittel kann insbesondere eine Mischung aus einem Epoxypolymer und einem thermoplastischen Polymer aus der Gruppe bestehend aus "Acryl, Methacryl, (ungesättigte) Polyester, Novolac, Phenoxy, und Mischungen oder Copolymere solcher Polymere" enthalten oder hieraus bestehen. Generell sind alle dem Fachmann einschlägig bekannten Bindemittelsysteme einsetzbar und sowohl vernetzende als auch thermoplastische Systeme sind denkbar.

Die leitfähigen Partikel (sowohl die elektromagnetische Strahlung absorbierenden oder reflektierenden Partikeln, als auch hiervon eventuell verschiedenen elektrischen Leitpartikel) können ausgewählt sein aus der Gruppe bestehend aus "Kohlenstoffpartikel und Metallpartikel, insbesondere Partikel aus Metallen der Haupt-, Neben- und Übergangsgruppe der 5., 6. und 7. Periode des Periodensystems der Elemente. Diese Elemente besitzen in der Regel mit steigender Ordnungszahl einen erhöhten Abschwächungskoeffizienten für Röntgenstrahlen (Vgl. Handbook of Chemistry and Physics, 86th Edition 2005-2006, Kapitel 10-234 ff.). Namentlich erwähnt seien Blei, Silber, Kupfer, Gold, Indium, Zinn, Antimon, Zink, Platin, Palladium, Eisen, Wolfram, Wismuth, Molybdän, Gadolinium und Legierungen solcher Metalle, sowie Partikel bestehend aus einem Kern sowie einem Mantel aus einem der vorstehenden Materialien".

Vorzugsweise haben die elektrischen Leitpartikel einen mittleren volumengewichteten Partikeldurchmesser im Bereich von 2 bis 40 µm, insbesondere von 3 bis 20 µm. Die elektromagnetische Strahlung absorbierenden oder reflektierenden elektrisch leitfähigen oder nichtleitfähigen Partikel haben typischerweise mittlere volumengewichtete Partikeldurchmesser im Bereich von 0,01 bis 2 µm, insbesondere von 0,1 bis 1 µm, im Falle der leitfähigen Partikel und von 0,01 bis 40 µm, insbesondere von 0,1 bis 10 µm.

Interessant im Rahmen der Erfindung sind auch nicht leitfähige Partikel, die fein verteilt in der Bindermatrix die leitfähigen Partikel umhüllen. Bevorzugt sollten die nicht leitfähigen Partikel aus Oxiden, Sulfoxiden, Silikaten, Boraten, Vanadaten, Sulfaten, Phosphaten oder Halogeniden der Haupt-, Neben- und Übergangsgruppe der 5., 6. und 7. Periode des Periodensystems der Elemente bestehen. Namentlich erwähnt seien BaTiO₃, BaSO₄ TiO₂, PbO₂, oder Ni₂O₃. Das Größenverhältnis der Partikeldurchmesser zwischen leitfähigen und nicht leitfähigen Kleberbestandteilen sollte > 2:1, besser > 5:1 sein.

Nichtleitfähige NIR bzw. IR-absorbierende Materialen können auch organischer Natur sein. Beispiel wären Lumogen® IR 788 und Lumogen® IR 765 (BASF)oder S 2058 und S 2007 (FEW)sowie hochkondensierte, ausgedehnte aromatische π-Elektronensysteme, wie Pentarylenbis(di-carboximid) [A], Quaterrylenedicarboximid [B], oder Octarylendicarboximid [C]

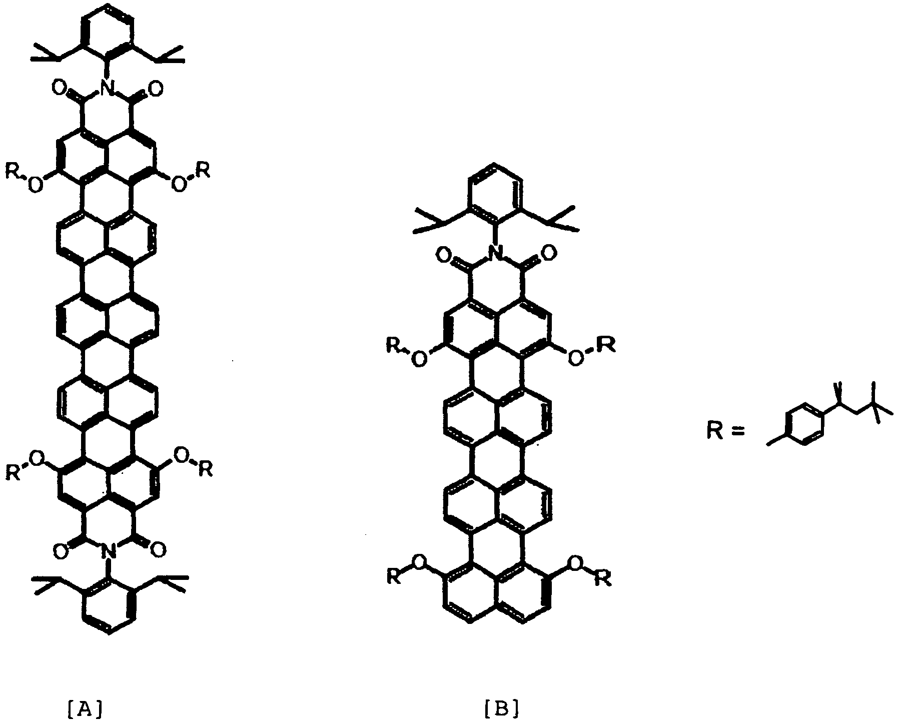

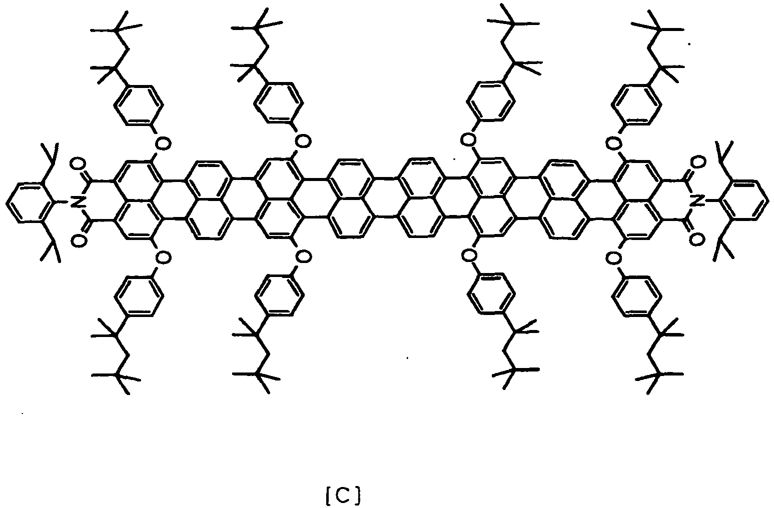

Bevorzugt ist es, wenn die Zusammensetzung einen thermisch aktivierbaren Vernetzungskatalysator enthält.

Im Einzelnen sind die folgenden Varianten möglich.

Während als Substrat grundsätzlich jedes beliebige Material in Frage kommt, ist es im Rahmen von Sicherheits- und/oder Wertdokumenten bevorzugt, wenn es sich um ein organisches Polymer, vorzugsweise ausgewählt aus der Gruppe bestehend aus "PC (Polycarbonat, insbesondere Bisphenol A Polycarbonat), PET (Polyethylenglykolterephthalat), PET-G, PET-F, PETix, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere", handelt. Insbesondere PC ist bevorzugt auf Grund seiner in diesem technologischen Bereich bekannten vorteilhaften sonstigen Eigenschaften.

Dann kann das Substrat beispielsweise eine Folie oder ein Folienverbund eines Sicherheits- und/oder Wertdokumentes, insbesondere eines Personalausweises, Reisepasses, einer ID-Karte, eines Zugangskontrollausweises, Visums, Tickets, Führerscheines, Kraftfahrzeugpapiers, personalisierten Wertpapiers, einer Kreditkarte, oder personalisierte Chipkarten, sein.

Grundsätzlich kann mit leitfähigen Schichten eine beliebige elektrische Funktion realisiert werden. So können beispielsweise Leiterbahnen zur "drahtgebundenen" Übertragung von elektrischen Signalen und/oder elektrischer Energie ausgebildet und gestaltet sein. Es kann sich bei einer leitfähigen Schicht aber auch um eine Spulenstruktur, genauer gesagt Antennenstruktur handeln, insbesondere eine Antennenstruktur, die Teil eines RFID Schaltkreises ist.

Typische Schichtdicken einer Beschichtung mit der erfindungsgemäßen Klebstoffzusammensetzung liegen im Bereich von 0,5 - 100 µm, insbesondere 5 - 50 µm, meist 10 - 30 µm.

Gut geeignete Bindemittel sind beispielsweise in den Literaturstellen WO 2006/055161 A1 oder WO 96/00969 beschrieben.

Geeignete fertige per se leitfähige Zubereitungen, welchen die erfindungsgemäß eingesetzten elektromagnetische Strahlung absorbierenden oder reflektierenden Partikel zugesetzt werden können, sind beispielsweise einschlägig bekannte Zubereitungen wie Conductor Paste DuPont 5029 oder 5028 oder 5033. Diese enthalten bereits Leitpartikel.

Die Aufbringung der Klebstoffzusammensetzung kann mit allen einschlägig bekannten Druckverfahren (z.B. Durch-, Tief-, Hoch- und Flachdruck aber auch Tintenstrahldruck, insbesondere Siebdruck) erfolgen. Aber auch andere in der Beschichtungstechnologie üblichen Aufbringungsverfahren, wie Spritzen, Streichen, Rakeln, Tauchen, etc. sind einsetzbar. Bevorzugt sind Siebdruck und Schablonendruck.

Die elektromagnetische Strahlung absorbierenden oder reflektierenden Partikel, ggf. zusätzlich zu hiervon verschiedenen Leitpartikel, können in der Klebstoffzusammensetzung mit 1 bis 70 Gew.-%, insbesondere 5 bis 50 Gew.-%, bevorzugt 5 bis 30 Gew.-%, zugegen sein, bezogen auf das Gesamtgewicht der Klebstoffzusammensetzung.

Die Absorption und/oder Reflektion elektromagnetischer Strahlung kann im IR-Bereich, im sichtbaren Bereich, im UV-Bereich, und/oder im Röntgenbereich erfolgen.

Im Folgenden wird die Erfindung anhand eines lediglich eine Ausführungsform darstellenden Beispiels näher erläutert.

### Beispiel 1: ICA mit elektromagnetische Strahlung absorbierenden Partikeln

Eine handelsübliche Klebstoffzusammensetzung, beispielsweise ein ICA, wird mit elektromagnetische Strahlung absorbierenden Partikeln, beispielsweise Carbon Black (Ruß), ausgestattet, und zwar vorzugsweise mit 5 Gew.-%, bezogen auf die Gesamtzusammensetzung. Die mittlere Partikelgröße beträgt vorzugsweise unter 0,2 µm. Durch das Carbon Black absorbiert die Klebstoffzusammensetzung elektromagnetische Strahlung über einen weiten Wellenlängenbereich des sichtbaren und NIR-Lichtes. Wird nunmehr eine mittels dieser Klebstoffzusammensetzung kontaktierte Struktur mit intensiver elektromagnetischer Strahlung in dem genannten Wellenlängenbereich bestrahlt, so ist die Struktur im Bereich der Klebstoffzusammensetzung abgeschirmt und so gegen eine "Lichtattacke" geschützt. Mit der Wahl dieses Materials für die Partikel in der angegebenen Menge werden keine Kurzschlüsse in der Anisotropie der Klebstoffzubereitung erzeugt.

### Beispiel 2: ACA mit elektromagnetische Strahlung (diffus) reflektierenden Partikeln

Eine handelsübliche Klebstoffzusammensetzung, beispielsweise ein ACA, wird mit einer elektrisch nicht leitenden Partikelspezies, beispielsweise einem Pigment, insbesondere einem Weißpigment, wie z.B. Titanoxid (TiO₂) ausgestattet, und zwar vorzugsweise mit 7 Gew.-%, bezogen auf die Gesamtzusammensetzung. Die mittlere Partikelgröße beträgt vorzugsweise unter 1,0 µm. Durch das Weißpigment reflektiert die Klebstoffzusammensetzung elektromagnetische Strahlung über einen weiten Wellenlängenbereich des sichtbaren und NIR-Lichtes. Wird nunmehr eine mittels dieser Klebstoffzusammensetzung kontaktierte Struktur mit intensiver elektromagnetischer Strahlung, beispielsweise intensiver, kohärenter Strahlung, beispielsweise Laserlicht, in dem genannten Wellenlängenbereich bestrahlt, so ist die Struktur im Bereich der Klebstoffzusammensetzung auf Grund der Reflexion dieser Strahlung abgeschirmt und so gegen eine "Lichtattacke" geschützt. Mit der Wahl beispielsweise dieses Materials für die Partikel und beispielsweise in der angegebenen Menge wird sichergestellt, dass die Klebstoffzubereitung nicht elektrisch isolierend wird.

### Beispiel 3: ACA mit Röntgenstrahlung absorbierenden Partikeln

Eine handelsübliche Klebstoffzusammensetzung, beispielsweise ein ACA, wird elektromagnetische Strahlung, insbesondere Röntgenstrahlung, absorbierenden Partikeln, beispielsweise mit Pb, PbO₂, BaSO₄ oder Ni₂O₃ Partikel, ausgestattet, und zwar vorzugsweise mit 3 Gew.-%, bezogen auf die Gesamtzusammensetzung. Die mittlere Partikelgröße beträgt vorzugsweise unter 1,0 µm. Durch diese Partikel absorbiert die Klebstoffzusammensetzung Röntgenstrahlung. Wird nunmehr eine mittels dieser Klebstoffzusammensetzung kontaktierte Struktur mit Röntgenstrahlung bestrahlt, beispielsweise um eine darunter liegende Chipstruktur (Bumps etc.) zu betrachten, so ist die Struktur im Bereich der Klebstoffzusammensetzung auf Grund der Absorption dieser Strahlung abgeschirmt und es ist lediglich ein "schwarzer" Fleck bei einer Auswertung einer Röntgenaufnahme des Bereiches erkennbar.

### Beispiel 4: ACA mit Mikrowellen-induzierbaren Stoffen

Der Kleber, insbesondere ein ACA, wird mit Nano-Ferrit-Teilchen oder Kern-Schale Partikeln (beispielsweise CdSe-Kern/ZnS-Schale) versetzt. Wenn nun Mikrowellen entsprechender Energiedichte appliziert werden, erfolgt in der Regel eine irreparable Schädigung des Chips, da metallische Flächen besonders Mikrowellen-sensitiv sind. Sind dem Kleber die o.g. Nanoteilchen zugesetzt, so absorbieren diese ebenfalls die Energie und unterlaufen dabei eine Stoffumwandlung, die zu einer Größenveränderung führt. Aufgrund der Größenänderung weisen die Nanopartikel ein differenziertes Absorptions- bzw. Lumineszenzverhalten auf. Diesen Effekt nennt man Größenquantifizierungseffekt. Die Kombination von Nanoferriten mit Nano-Kern-Schale Partikeln dürfte dabei sehr sensitiv sein.

In dieser Ausführungsform wird neben ggf. einem Schutz des Schaltkreises bzw. seiner Kontaktstellen auch ein Mittel zum Nachweis von Angriffen mit Mikrowellen geschaffen. Denn die Größenänderung in Verbindung mit dem Größenquantifizierungseffekt ermöglicht es, anhand der so geänderten Absorptions- bzw. Lumineszenzeigenschaften eine Mikrowellenexposition nachzuweisen. Auch wenn die vorstehende Schutzfunktion nicht erfüllt werden sollte, so ermöglicht diese Ausführungsform zumindest den Nachweis eines Manipulationsversuches mit Mikrowellen. Dadurch werden auch unberechtigte Reklamationen von Personen, welche absichtlich einen Defekt durch Mikrowellenexposition hervorufen und dann einen technischen Defekt und Gewährleistungsansprüche behaupten, aufgedeckt.

## Patentansprüche

1. Sicherheits- und/oder Wertdokument mit einem Substrat enthaltend elektrische Leitungen mit Kontaktbereichen sowie zumindest einen Schaltkreis mit Kontaktbereichen, wobei die Kontaktbereiche der Leitungen mit zugeordneten Kontaktbereichen des Schaltkreises mittels einer Klebstoffzusammensetzung elektrisch und mechanisch miteinander verbunden sind, **dadurch gekennzeichnet, dass** die Klebstoffzusammensetzung enthält:
ein Bindemittel enthaltend ein organisches Polymer oder mehrere verschiedene organische Polymere,
elektrische Leitpartikel, und
elektromagnetische Strahlung absorbierende oder reflektierende elektrisch leitfähige oder nichtleitfähige Partikel, welche von den Leitpartikeln verschieden sind.

2. Sicherheits- und/oder Wertdokument nach Anspruch 1, wobei die Klebstoffzusammensetzung ein Anisotropic Conductive Adhesive (ACA) ist, welchem elektromagnetische Strahlung absorbierende oder reflektierende elektrisch leitfähige oder nichtleitfähige Partikel zugesetzt sind, die von den Leitpartikeln des ACAs verschieden sind.

3. Sicherheits- und/oder Wertdokument nach Anspruch 1, oder 2, wobei das Bindemittel ein Polymer aus der Gruppe bestehend aus "Epoxy, Acryl, Methacryl, Polyester, Novolac, Phenoxy, und Mischungen oder Copolymere solcher Polymere" enthält oder hieraus besteht, insbesondere eine Mischung aus einem Epoxypolymer und einem thermoplastischen Polymer aus der Gruppe bestehend aus "Acryl, Methacryl, Polyester, Novolac, Phenoxy, und Mischungen oder Copolymere solcher Polymere" enthält oder hieraus besteht.

4. Sicherheits- und/oder Wertdokument nach einem der Ansprüche 1 bis 3, wobei die leitfähigen Partikel ausgewählt sind aus der Gruppe bestehend aus "Kohlenstoffpartikel und Metallpartikel, insbesondere Partikel aus Blei, Silber, Kupfer, Gold, Zinn, Zink, Platin, Palladium, Eisen, Wolfram, Molybdän, und Legierungen solcher Metalle, sowie Partikel bestehend aus einem Kern sowie einem Mantel aus einem der vorstehenden Materialien", und/oder wobei die elektrisch leitfähigen Partikel einen mittleren volumengewichteten Partikeldurchmesser im Bereich von 2 bis 40 µm, insbesondere von 3 bis 20 µm, aufweisen.

5. Sicherheits- und/oder Wertdokument nach einem der Ansprüche 1 bis 4, wobei die elektrisch nichtleitenden Partikel ausgewählt sind aus der Gruppe bestehend aus Ruß und Metalloxiden, vorzugsweise aus TiO₂, PbO₂, oder Ni₂O₃ gebildet sind.

6. Sicherheits- und/oder Wertdokument nach einem der Ansprüche 1 bis 5, wobei die Zusammensetzung einen thermisch aktivierbaren Vernetzungskatalysator enthält.

## Claims

1. A security and/or valuable document, comprising a substrate including electrical leads with contact areas as well as at least one circuit with contact areas, the contact areas of the leads with the associated contact areas of the circuit being electrically and mechanically connected to each other by means of an adhesive composition, **characterized in that** the adhesive composition contains:
a binder comprising an organic polymer or several different organic polymers,
electrical conduction particles, and
electrically conductive or non-conductive particles absorbing or reflecting electromagnetic radiation, which particles are different from the conduction particles.

2. The security and/or valuable document according to claim 1, wherein the adhesive composition is an anisotropic conductive adhesive (ACA), to which are added electrically conductive or non-conductive particles absorbing or reflecting electromagnetic radiation, which particles are different from the conduction particles of the ACA.

3. The security and/or valuable document according to claim 1 or 2, wherein the binder contains a polymer selected from the group consisting of "epoxy, acrylic, methacrylic, polyester, novolac, phenoxy, and mixtures or copolymers of such polymers", or consists thereof, in particular contains a mixture of an epoxy polymer and a thermoplastic polymer selected from the group consisting of "acrylic, methacrylic, polyester, novolac, phenoxy, and mixtures or copolymers of such polymers", or consists thereof.

4. The security and/or valuable document according to one of claims 1 to 3, wherein the conductive particles are selected from the group consisting of "carbon particles and metal particles, especially particles of lead, silver, copper, gold, tin, zinc, platinum, palladium, iron, tungsten, molybdenum, and alloys of such metals, as well as particles consisting of a core and a shell of one of the above materials", and/or wherein the electrically conductive particles have an average volume-weighted particle diameter in the range from 2 to 40 µm, in particular 3 to 20 µm.

5. The security and/or valuable document according to one of claims 1 to 4, wherein the electrically non-conductive particles are selected from the group consisting of carbon black and metal oxides, preferably are formed from TiO₂, PbO₂, or Ni₂O₃.

6. The security and/or valuable document according to one of claims 1 to 5, wherein the composition contains a cross-linking catalyst that can be thermally activated.

## Revendications

1. Document de sécurité et/ou de valeur, comprenant un substrat comportant des conducteurs électriques avec des plages de contact aussi bien qu'au moins un circuit avec des plages de contact, les plages de contact des conducteurs avec les plages de contact associées du circuit étant électriquement et mécaniquement raccordées les unes aux autres au moyen d'une composition adhésive, **caractérisé en ce que** la composition adhésive contient:
un liant comportant un polymère organique ou plusieurs polymères organiques différents,
des particules de conduction électriques et
des particules électroconductrices ou non électroconductrices absorbant ou réfléchissant les rayonnements électromagnétiques, ces particules étant différentes des particules de conduction.

2. Document de sécurité et/ou de valeur selon la revendication 1, dans lequel la composition adhésive est une colle conductrice anisotrope (CCA), à laquelle sont ajoutées des particules électriquement conductrices ou non conductrices absorbant ou réfléchissant les rayonnements électromagnétiques, qui sont différents des particules de conduction la CCA.

3. Document de sécurité et/ou de valeur selon la revendication 1 ou 2, dans lequel le liant contient un polymère choisi parmi le groupe consistant en "époxy, acrylique, méthacrylique, polyester, novolac, phénoxy et de mélanges ou copolymères de tels polymères", ou consiste en celui-ci, en particulier contient un mélange d'un polymère époxy et d'un polymère thermoplastique choisi parmi le groupe consistant en "acrylique, méthacrylique, polyester, novolac, phénoxy et de mélanges ou copolymères de tels polymères", ou consiste en celui-ci.

4. Document de sécurité et/ou de valeur selon une des revendications 1 à 3, dans lequel les particules conductrices sont choisies parmi le groupe consistant en "particules de carbone et particules de métal, en particulier particules de plomb, argent, cuivre, or, étain, zinc, platine, palladium, fer, tungstène, molybdène, et des alliages de tels métaux, aussi bien que des particules consistant en un coeur et une écorce en un des matériaux ci-dessus", et/ou dans lequel les particules électroconductrices ont un diamètre de particule moyen pondéré en volume dans la gamme comprise entre 2 et 40 µm, en particulier 3 et 20 µm.

5. Document de sécurité et/ou de valeur selon une des revendications 1 à 4, dans lequel les particules non électroconductrices sont choisies parmi le groupe consistant en noir de carbone et des oxydes métalliques, de préférence sont formées à partir de TiO₂, PbO₂ ou Ni₂O₃.

6. Document de sécurité et/ou de valeur selon une des revendications 1 à 5, dans lequel la composition comporte un catalyseur de réticulation qui peut être thermiquement activé.
